# EUROPÄISCHE PATENTANMELDUNG

(11) **EP 0 708 316 A2**
(43) Veröffentlichungstag der Anmeldung: **24.04.1996**
(21) Anmeldenummer: 95116153.8
(22) Anmeldetag: 13.10.1995
(51) Int. Cl.: G01J 3/10, G08B 17/103

(54) **Vorrichtung zum Erzeugen einer Breitbandstrahlung**

(30) Priorität: 19.10.1994 DE 4437311
(71) Anmelder: HEKATRON GmbH, D-79295 Sulzburg (DE)
(72) Erfinder: Sommer, Michael, Dipl.-Ing., D-79427 Eschbach (DE); Kuhn-Matysiak, Ulrich, Dipl.-Ing.(FH), D-79219 Staufen (DE)
(74) Vertreter: Schmitt, Hans, Dipl.-Ing.

(57) **Zusammenfassung**

Eine Vorrichtung zum Erzeugen einer Breitbandstrahlung weist einen vorzugsweise als dünne Absorptionsschicht (4) ausgebildeten Breitbandstrahler auf, der mittels einer pulsbaren Energiequelle (6) geringer mittlerer Leistung beheizbar ist. Vorzugsweise ist der als Absorptionsschicht ausgebildete Breitbandstrahler dazu im Strahlengang eines pulsbaren Halbleiterstrahlers angeordnet. Die Ausgangspulse der Energiequelle (6) sind bezüglich ihrer Pulsenergie und ihres Puls-Pausen-Verhältnisses so auf die Wärmekapazität des Breitbandstrahlers abgestimmt, daß dieser in den Pulspausen weitgehend abkühlt.
Die Vorrichtung (1) weist nur einen sehr geringen Energieverbrauch auf und eignet sich deshalb besonders für eine Verwendung in batterie- oder akkubetriebenen Geräten, beispielsweise in Gas- oder Brandmeldern.

## Beschreibung

Die Erfindung bezieht sich auf eine Vorrichtung zum Erzeugen einer Breitbandstrahlung mit wenigstens einem, mit einer Energiequelle beheizbaren Breitbandstrahler zum Abstrahlen eines elektromagnetischen Breitband-Spektrums, insbesondere einem Schwarz- oder Graustrahler.

Aus DE-41 26 361 A1 kennt man bereits einen Breitbandstrahler der eingangs genannten Art, der als Glühlampe mit einer von anorganischem Material umschlossenen Glühwendel ausgebildet ist. Solche Breitbandstrahler finden beispielsweise in Gasanalysegeräten Verwendung, um mittels photometrischer Verfahren die Konzentration bestimmter Gase zu messen. Dabei ist dem Breitbandstrahler vorzugsweise ein Schmalband-Filter nachgeschaltet, dessen Durchlaßbereich auf eine Absorptionswellenlänge des zu messenden Gases abgestimmt ist. Die so gefilterte Strahlung durchläuft dann eine Meßkammer, in der sich das zu messende Gas befindet. Abhängig von der Konzentration des Gases wird die Strahlung in der Meßkammer mehr oder weniger stark absorbiert, was mittels eines der Meßkammer nachgeschalteten Strahlungsintensitätssensor detektiert und zum Ermitteln der Strahlungsintensität ausgewertet wird. Vorteilhaft ist bei dem vorbekannten Breitbandstrahlers, daß aufgrund der breitbandigen Abstrahlcharakteristik des Strahlers durch Kombination mit einem geeigneten Schmalband-Filter eine Schmalbandstrahlung praktisch beliebiger Wellenlänge erzeugt werden kann, so daß ein mit dem Breitbandstrahler bestücktes Gasmeßgerät auf einfache Weise an die Absorptionswellenlängen unterschiedlicher Gase angepaßt werden kann. Ein Nachteil des vorbekannten Breitbandstrahlers besteht jedoch darin, daß die Glühwendel einen nicht unerheblichen Stromverbrauch aufweist, was besonders bei batteriebetriebenen Gasmeßgeräten, wie sie beispielsweise in Brandmeldern zur Detektion von CO oder CO2 Verwendung finden, ungünstig ist. In größeren Gebäuden, beispielsweise in Fabrikhallen, Kaufhäusern oder Bürogebäuden sind oft einige Hundert solcher Brandmelder installiert, die bei einem Stromausfall aus Sicherheitsgründen noch mehrere Tage lang funktionsbereit sein müssen. Für ein Brandmeldesystem ergibt sich daher bereits bei einer Leistungsaufnahme von nur wenigen Watt für jeden der in den Brandmeldern enthaltenen Breitbandstrahlern eine beachtliche Gesamtleistung, die eine entsprechend aufwendige und teuere Notstromversorgung erfordert.

Es besteht deshalb die Aufgabe, eine Vorrichtung der eingangs genannten Art zu schaffen, bei welcher der Energieverbrauch bzw. die Leistungsaufnahme reduziert ist und die insbesondere auch für Batterie- oder Akkubetrieb geeignet ist.

Die Lösung dieser Aufgabe besteht bei einer Vorrichtung der eingangs genannten Art darin, daß der Breitbandstrahler als dünne Schicht mit niedriger Wärmekapazität ausgebildet ist und daß zum Beheizen des Breitbandstrahlers eine pulsbare Energiequelle mit geringer mittlerer Leistung vorgesehen ist, deren Ausgangspulse bezüglich ihrer Pulsenergie und ihres Puls-Pausen-Verhältnisses so auf die Wärmekapazität des Breitbandstrahlers abgestimmt sind, daß dieser in den Pulspausen weitgehend abkühlt.

Der Breitbandstrahler ist also als dünne Schicht ausgebildet und weist daher trotz seiner niedrigen Wärmekapazität eine vergleichsweise große Abstrahlfläche auf. Der Breitbandstrahler kann dadurch innerhalb kurzer Zeit, beispielsweise in einer Millisekunde, von Raumtemperatur auf die vorgesehene Betriebstemperatur erwärmt werden. Zum Beheizen ist der Breitbandstrahler mit einer pulsbaren Energiequelle gekoppelt, deren Pulsenergie so auf die Wärmekapazität des Breitbandstrahlers abgestimmt ist, daß dieser während der Pulszeit auf Betriebstemperatur aufgeheizt wird und in den Pulspausen weitgehend abkühlt. Wegen der niedrigen Wärmekapazität des Breitbandstrahlers ist zu dessen Erwärmen auf Betriebstemperatur nur eine vergleichsweise kleine Energiemenge bzw. eine entsprechend geringe Heizleistung erforderlich. Da die Vorrichtung während der Pulspausen praktisch keine Energie aufnimmt und auch während der Pulsphasen nur eine geringe Energiemenge benötigt wird, weist die Vorrichtung insgesamt einen niedrigen mittleren Energieverbrauch auf, was besonders bei einer Verwendung der Vorrichtung in batteriebetriebenen Geräten vorteilhaft ist. Da es für viele Anwendungsfälle, insbesondere bei Überwachungsaufgaben ausreichend ist, Messungen in bestimmten Zeitabständen durchzuführen, ohne daß dadurch Informationsverluste auftreten, wirkt sich die getaktete Betriebsweise des Breitbandstrahlers in der Praxis praktisch nicht nachteilig aus. Die geringe Wärmekapazität des Breitbandstrahlers ermöglicht ein Aussenden optischer Strahlungsimpulse in schneller Folge, so daß die erfindungsgemäße Vorrichtung bei den meisten Anwendungen, beispielsweise in der industriellen Gasanalyse, in Brandmeldern oder in der Umweltmeßtechnik trotz der getakteten Betriebsweise für quasi-kontinuierliche Messungen eingesetzt werden kann.

Bei einer Weiterbildung der Erfindung ist als Energiequelle zum Beheizen des Breitbandstrahlers eine optische Halbleiterstrahlungsquelle, insbesondere eine Laserdiode vorgesehen, wobei der Breitbandstrahler im wesentlichen aus einer Absorptionsschicht besteht oder eine solche aufweist, die im Strahlengang der Halbleiterstrahlungsquelle angeordnet ist. Die praktisch trägheitslos arbeitende Halbleiterstrahlungsquelle ermöglicht ein besonders schnelles und verlustarmes Erwärmen der Absorptionsschicht. Vorteilhaft ist dabei insbesondere, daß Halbleiterstrahlungsquellen, beispielsweise Laser- oder Leuchtdioden als Serienbauelemente in großen Stückzahlen kostengünstig verfügbar sind. Besonders geeignet als Energiequelle sind Laserdioden, da sie wegen ihrer hohen Pulsenergien, der kurzen Pulszeiten und des kleinen Abstrahlwinkels besonders hohe Energiedichten und damit entsprechend kurze Aufheizzeiten für die Absorptionsschicht ermöglichen.

Zweckmäßigerweise ist vorgesehen, daß zum Einstellen der Strahlungstemperatur der Absorptionsschicht die Pulsdauer und/oder die Intensität der Halbleiterstrahlung veränderbar ist. Die Strahlungsintensität der Absorptionsschicht kann dadurch auf einfache Weise an die jeweilige Anwendung, beispielsweise an eine in einem Meßsystem vorhandene Übertragungsstrecke angepaßt werden.

Eine Ausführungsform sieht vor, daß das Material oder die Materialzusammensetzung der Absorptionsschicht an ein für die Breitbandstrahlung vorgegebenes Abstrahlspektrum, insbesondere an ein von dem Spektrum eines schwarzen oder grauen Strahlers abweichendes Spektrum, angepaßt ist. Der Spektralbereich der Vorrichtung kann dadurch beispielsweise auf die Filtercharakteristik eines nachgeschalteten optischen Filters abgestimmt werden. Dabei kann als Absorptionsschicht beispielsweise eine Platin-, Titan-, Aluminiumoxyd oder eine Sinterkeramik-Schicht vorgesehen sein.

Vorteilhaft ist, wenn wenigstens eine für das Spektrum der Breitbandstrahlung relevante Schichteigenschaft der Absorptionsschicht, insbesondere deren Emissionskoeffizient durch elektrische, optische und/oder chemische Beeinflussung der Absorptionsschicht, vorzugsweise während des Betriebs des Breitbandstrahlers, veränderbar ist. Die Vorrichtung kann dadurch besonders gut auf den Spektralbereich von optischen Filtern mit unterschiedlichen Frequenzbereichen abgestimmt werden. Außerdem ist eine Anpassung an die spektrale Empfindlichkeit von mit dem Breitbandstrahler gekoppelten Empfängern möglich.

Eine Weiterbildung der Erfindung sieht vor, daß die Absorptionsschicht oder der Breitbandstrahler auf einem vorzugsweise für die Halbleiterstrahlung strahlungsdurchlässigen Träger, insbesondere einer Trägerplatte mit hohem Wärmeleitungswiderstand angeordnet ist. Die Absorptionsschicht kann dadurch besonders dünn, beispielsweise als auf eine Quarzglasplatte aufgedampfte Schicht ausgebildet sein, und weist dennoch in Kombination mit dem Träger eine gute mechanische Stabilität auf.

Eine besonders vorteilhafte Ausführungsform sieht vor, daß der Halbleiterstrahler als optoelektronisches Bauelement in ein Gehäuse integriert ist, daß die Absorptionsschicht integrales Bestandteil dieses Gehäuses ist und vorzugsweise mikromechanisch an das Gehäuse angebunden ist. Die Vorrichtung weist dann einen besonders kompakten Aufbau auf und kann als optoelektronisches Standardbauelement auf einfache Weise in eine elektronische Schaltung integriert werden.

Zweckmäßigerweise ist vorgesehen, daß die Halbleiterstrahlungsquelle, die Absorptionsschicht und gegebenenfalls zumindest ein frequenzselektiver optischer Filter für die Breitbandstrahlung eine kompakte Baueinheit bilden. Der optische Filter kann dann für die wichtigsten Absorptionswellenlängen, zum Beispiel für CO2 (4,7 µm), für CO (4,3 µm) oder für jede beliebige andere Wellenlänge gleich in die Baueinheit, beispielsweise in ein Laser- oder Leuchtdiodengehäuse integriert werden, so daß für die einzelnen Wellenlängen Standardbausteine zur Verfügung stehen, mit denen beispielsweise sehr kompakte und einfach aufgebaute Gasmeßgeräte für unterschiedliche Gase realisiert werden können.

Vorteilhaft ist, wenn der Halbleiterstrahler in ein Gehäuse integriert ist, das zumindest in einem Teilbereich für die Halbleiterstrahlung strahlungsdurchlässig ist und daß die Absorptionsschicht in diesem Teilbereich des Gehäuses an der Gehäuseaußenwandung vorgesehen ist. Die Vorrichtung kann dadurch besonders kostengünstig durch Aufdampfen oder dergleichen Aufbringen einer Absorptionsschicht auf das Gehäuse eines handelsüblichen Halbleiterstrahlers, beispielsweise einer Laser- oder Leuchtdiode, hergestellt werden.

Bei einer anderen Ausführungsform ist der Halbleiterstrahler so in ein Gehäuse integriert, daß die Absorptionsschicht in einem von der Halbleiterstrahlung beaufschlagten Bereich der Innenwandung dieses Gehäuses vorgesehen ist und daß wenigstens ein Teilbereich des Gehäuses zumindest in einem bestimmten Wellenlängenbereich der Breitbandstrahlung strahlungsdurchlässig ist. Die Absorptionsschicht ist also in diesem Fall an der Innenwandung des Gehäuses vorgesehen und ist dadurch besonders gut gegen mechanische Beschädigung oder gegen Abrieb geschützt.

Bedarfsweise kann das Gehäuse zumindest in seinem strahlungsdurchlässigen Teilbereich als frequenzselektriver optischer Filter, insbesondere als Interferenzfilter ausgebildet sein. Die Abstrahlcharakteristik der Vorrichtung kann dadurch praktisch beliebig beeinflußt werden, wobei insbesondere durch Ausbildung des strahlungsdurchlässigen Gehäuse-Teilbereichs als Interferenzfilter sehr schmalbandige Strahler mit nahezu beliebiger Wellenlänge realisiert werden können. Als Interferenzfilter kann beispielsweise eine dünne Metall- bzw. Goldschicht auf die Außenseite des Gehäuses aufgedampft sein.

Eine Ausführungsform der Erfindung sieht vor, daß der Breitbandstrahler im wesentlichen aus einer elektrisch leitfähigen Widerstandsschicht besteht und daß als Energiequelle zum Beheizen des Strahlers eine Pulsstromquelle vorgesehen ist. Die Vorrichtung ist dann besonders einfach und kostengünstig herstellbar.

Eine Weiterbildung der Erfindung sieht vor, daß der Breitbandstrahler zum Messen der Konzentration zumindest eines Gases mit wenigstens einem Empfänger elektromagnetisch gekoppelt ist, daß in einem zwischen dem Breitbandstrahler und der Empfänger befindlichen Strahlengang sich das zu detektierende Gas befindet und daß in dem Strahlengang zumindest ein frequenzselektiver optischer Filter angeordnet ist, dessen Durchlaßbereich auf wenigstens eine Absorptionswellenlänge des zu messenden Gases abgestimmt ist. Eine solche Vorrichtung kann beispielsweise als Brandmelder ausgebildet sein, wenn als Filter ein Schmalband-Filter mit einem Durchlaßfenster im Bereich der Absorptionswellenlängen von CO2 (4,7 µm) und/oder CO (4,3 µm) vorgesehen ist. Dabei fällt das Empfangssignal mit zunehmender Konzentration der vorgenannten Gase im Strahlengang ab, was beim Unterschreiten eines vorgegebenen Schwellwertes beispielsweise mittels einer geeigneten Steuer- und Auswertevorrichtung in ein Brandwarnsignal umgesetzt werden kann. Wegen des geringen Stromverbrauchs eignet sich eine solche Vorrichtung besonders für batteriebetriebene oder akkugepufferte Geräte.

Nachfolgend sind Ausführungsbeispiele der Erfindung anhand der Zeichnung näher erläutert.

Es zeigen in unterschiedlichen Maßstäben und zum Teil stärker schematisiert:
- Fig.1: einenen Längsschnitt durch eine Vorrichtung zum Erzeugen einer breitbandigen optischen Strahlung, mit einer Halbleiterlichtquelle, in deren Strahlengang eine auf eine Trägerplatte aufgebrachte dünne Absorptionsschicht angeordnet ist,
- Fig.2: eine Aufsicht auf die in Fig.1 gezeigte Vorrichtung, welche die Absorptionsschicht besonders gut erkennen läßt,
- Fig.3: einen Längsschnitt einer Vorrichtung ähnlich Fig.1, wobei jedoch die Absorptionsschicht innenseitig an der Trägerplatte vorgesehen ist und an der Außenseite der Trägerplatte ein Filter für die von der Absorptionsschicht emitierte Breitbandstrahlung angeordnet ist,
- Fig.4: eine Ansicht auf die Ebene A-A in Figur 3, wobei die mikromechanische Anbindung der Absorptionsschicht an das Vorrichtungsgehäuse besonders gut erkennbar ist und
- Fig.5: eine Vorrichtung zum Messen der Konzentration eines in einer Meßkammer befindlichen Gases, wobei an dem einen Ende der Meßkammer die in Fig.3 gezeigte Breitbandstrahlungs-Vorrichtung und an dem anderen Ende ein optischer Empfänger angeordnet ist, die jeweils mit einer Auswerte- und Steuereinheit verbunden sind.

Eine im ganzen mit 1 bezeichnete Vorrichtung zum Erzeugen einer Breitbandstrahlung weist eine in ein Vorrichtungsgehäuse 2 integrierte Laserdiode 3 auf, in deren Strahlengang eine die Laserstrahlung absorbierende Absorptionsschicht 4 angeordnet ist. Die Absorptionsschicht 4 ist an der äußeren Flachseite einer mit dem Vorrichtungsgehäuse 2 verbundenen Trägerplatte 5 aus Quarzglas angeordnet, die für die Laserstrahlung der Laserdiode 3 durchlässig ist. Die Absorptionsschicht 4 ist sehr dünn ausgebildet und weist bei einer vergleichsweise großen Fläche nur eine geringe Wärmekapazität auf. Durch Bestrahlung mit der Laserstrahlung der Laserdiode 3 kann die Absorptionsschicht 4 innerhalb von etwa einer Millisekunde von Raumtemperatur auf mehrere 100° C erhitzt werden. Die so erhitzte Absorptionsschicht strahlt dann nach dem Plank'schen Strahlungsgesetz als Schwarz- oder Graustrahler eine breitbandige elektromagnetische Strahlung ab. Als Stromquelle für die Laserdiode 3 weist die Vorrichtung 1 ferner eine pulsbare Energiequelle 6 auf, deren Puls-Pausen-Verhältnis so auf die Wärmekapazität der Absorptionsschicht 4 abgestimmt ist, daß diese in der Pulsphase auf Betriebstemperatur erhitzt wird und in den Pulspausen weitgehend abkühlt. Da die Laserdiode 3 während der Pulspausen keinen Betriebsstrom benötigt, weist die Vorrichtung bei einem entsprechenden Puls-Pausen-Verhältnis einen sehr niedrigen Energieverbrauch auf. Wenn die Vorrichtung beispielsweise in einem Meßsystem eingesetzt wird, mit dem pro Sekunde etwa eine Messung durchgeführt werden soll, ergibt sich bei einer Pulszeit von einer Millisekunde etwa ein Puls-Pausen-Verhältnis von 1 : 1000. Die Stromaufnahme der Vorrichtung 1 ist dadurch gegenüber dem cw-Betrieb der Laserdiode 3 etwa um drei Zehnerpotenzen reduziert. Die Vorrichtung ist deshalb besonders für Batterie- oder Akku-Betrieb geeignet.

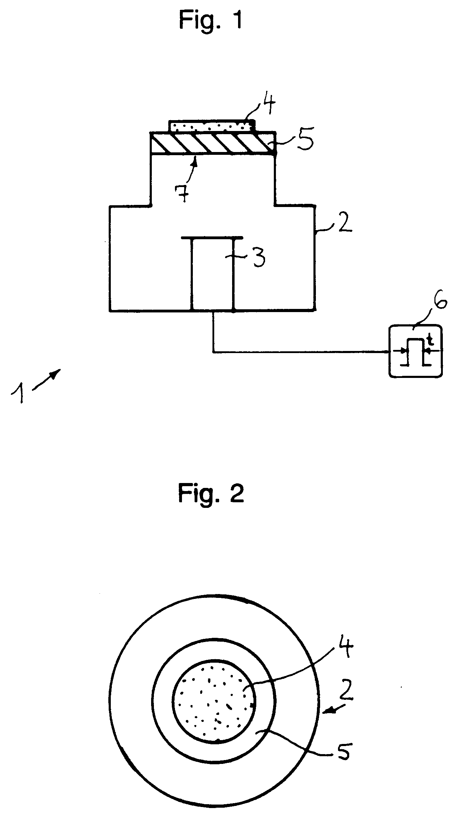

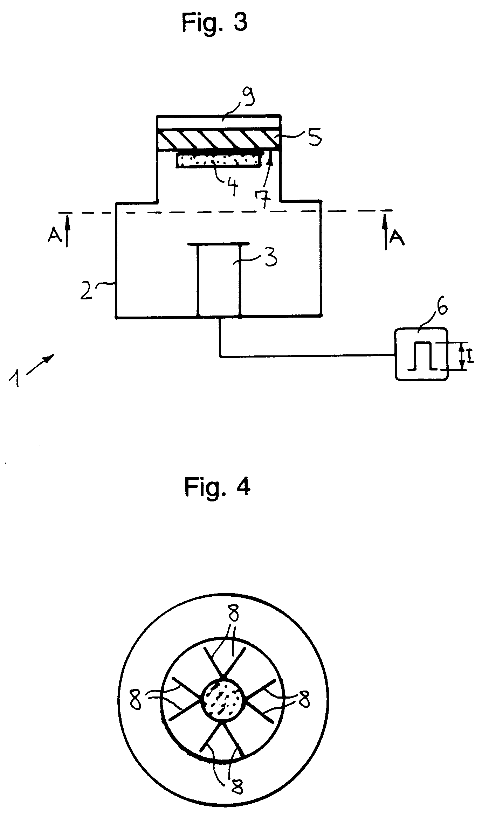

Zum Einstellen der Strahlungstemperatur der Absorptionsschicht 4 bzw. der Intensität der abgestrahlten elektromagnetischen Strahlung ist die Pulsdauer t der Energiequelle 6 einstellbar (Fig.1). Bei der in Fig.3 gezeigten Ausführungsform ist zum Einstellen der Strahlungstemperatur der Absorptionsschicht 4 die Intensität der Laserstrahlung der Laserdiode 3 durch Einstellen des Pulsstromes I der Energiequelle 6 veränderbar.

Bei dem Ausführungsbeispiel nach Fig. 1 ist die Absorptionsschicht 4 außenseitig auf die Trägerplatte 5 aufgebracht. Die Trägerplatte 5 weist eine geringe Wärmeleitungsfähigkeit auf, damit die Absorptionsschicht 4 mit der von der Laserdiode 3 emittierten Laserstrahlung möglichst schnell auf die gewünschte Abstrahltemperatur erhitzt werden kann. Die Trägerplatte 5 weist außerdem im Bereich der Wellenlänge der Laserdiodenstrahlung eine hohe Transparenz auf, damit die Laserdiodenstrahlung möglichst verlustfrei zu der Absorptionsschicht 4 gelangen kann.

Bei der in Fig.3 gezeigten Ausführungsform ist die Absorptionsschicht 4 dicht benachbart zur Innenseite 7 der Trägerplatte 5 in dem Vorrichtungsgehäuse 2 angeordnet. Die Befestigung der Absorptionsschicht 4 erfolgt hier mittels mikromechanischer Anbindung 8 seitlich an dem Vorrichtungsgehäuse 2. Die Absorptionsschicht 4 ist dadurch praktisch frei in dem Vorrichtungsgehäuse 2 aufgehängt, so daß die Wärmeleitungsverluste der Absorptionsschicht 4 entsprechend gering sind.
Bei der Vorrichtung nach Fig. 3 ist außenseitig auf die Trägerplatte 5 ein Schmalband-Filter 9 aufgebracht. Durch Kombination mit unterschiedlichen Filtern 9 kann mit der Vorrichtung 1 praktisch in beliebigen Wellenlängenbereichen eine schmalbandige elektromagnetische Strahlung erzeugt werden. Die Abstrahlwellenlänge der Vorrichtung 1 kann dadurch auf einfache Weise an die Absorptionswellenlängen unterschiedlicher Gase angepaßt werden, weshalb die Vorrichtung 1 besonders gut für eine Verwendung in Gasmeßgeräten geeignet ist.

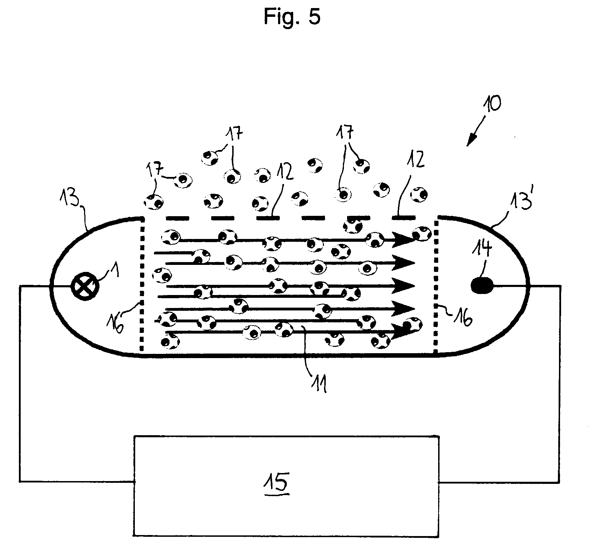

Fig.5 zeigt eine im ganzen mit 10 bezeichnete Vorrichtung zur Messung der Konzentration eines beispielsweise in der Umgebungsluft enthaltenen Gases. Die Vorrichtung weist eine Meßkammer 11 mit einer gasdurchlässigen Außenwandung 12 auf, durch welche die in Fig.5 als Kugeln dargestellten Gasatome aus der Umgebung der Vorrichtung 10 in die Meßkammer 11 diffundieren können. An einem stirnseitigen Ende der Maßkammer 11 ist die in Fig. 3 gezeigte Vorrichtung 1 angeordnet, die eine als Schwarzstrahler ausgebildete Absorptionsschicht 4 aufweist, die im Strahlengang einer von einer pulsbaren Stromquelle betriebenen Laserdiode 3 angeordnet ist und von dieser periodisch erhitzt wird. Die Absorptionsschicht 4 strahlt dadurch nach dem Plank'schen Strahlungsgesetz in durch den Pulstakt vorgegebenen Zeitabständen periodische wiederkehrende breitbandige Strahlungsimpulse aus. Der Absorptionsschicht 4 ist ein Schmalband-Filter 9 (Fig.3) nachgeschaltet, dessen Durchlaßfenster auf eine Absorptionswellenlänge des zu messenden Gases abgestimmt ist. Die Vorrichtung 1 ist im Brennpunkt eines Parabolspiegels 13 angeordnet (Fig. 5), der die von der Vorrichtung 1 ausgesendete Strahlung so bündelt, daß diese die Meßkammer 11 durchdringt und zu einem an dem der Vorrichtung 1 abgewandten stirnseitigen Ende der Meßkammer 11 angeordneten Empfänger 14 gelangt. Um die Empfindlichkeit der Vorrichtung 10 zu verbessern, ist der Empfänger 14 ebenfalls im Brennpunkt eines Parabolspiegels 13' angeordnet. Die Vorrichtung 1 und der Empfänger 14 sind mit einer Auswerte- und Steuereinrichtung 15 verbunden, die synchron zu den Sendeimpulsen der Vorrichtung 1, jeweils zum Zeitpunkt der größten Strahlungsintensität das von dem Empfänger 14 detektierte Signal auswertet. Abhängig von der Konzentration des zu messenden Gases in der Meßkammer 11 wird die die Meßkammer durchlaufende Strahlung durch Absorption mehr oder weniger stark geschwächt. Das von dem Empfänger 14 detektierte Meßsignal stellt somit ein Maß für die Gaskonzentration in der Meßkammer 11 dar, so daß diese nach Aufbereitung der Meßwerte in der Auswerte- und Steuereinrichtung ermittelt werden kann.
Besonders vorteilhaft ist, daß die Vorrichtung 10 wegen der im Pulsbetrieb betriebenen Laserdiode 3 nur eine sehr geringe mittlere Leistungsaufnahme aufweist und daher besonders gut für Batterie- odr Akku-Betrieb geeignet ist. Die Vorrichtung 10 kann beispielsweise als Brandmelder verwendet werden, wenn die Wellenlänge des Schmalband-Filters 9 auf die Absorptionswellenlänge von CO2 (4,7µ) und/oder CO (4,3µ) abgestimmt ist. Bei Batterie- oder Akku-Betrieb arbeitet ein solcher Brandmelder netzunabhängig, so daß auch bei einem Stromausfall oder bei Störungen in der elektrischen Energieversorgung die volle Funktionsfähigkeit des Brandmelders erhalten bleibt.

Erwähnt werden soll noch, daß bei der in Fig.5 gezeigten Vorrichtung 10 für die Parabolspiegel 13, 13' den Empfänger 14 und die Vorrichtung 1 eine strahlungsdurchlässige Abdeckung 16 vorgesehen ist. Die Vorrichtung 10 kann dann beispielsweise auch zum detektieren aggresiver Gaser verwendet werden.

## Patentansprüche

1. Vorrichtung zum Erzeugen einer Breitbandstrahlung mit wenigstens einem, mit einer Energiequelle beheizbaren Breitbandstrahler zum Abstrahlen eines elektromagnetischen Breitbandspektrums, insbesondere einem Schwarz- oder Graustrahler, **dadurch gekennzeichnet**, daß der Breitbandstrahler als dünne Schicht mit niedriger Wärmekapazität ausgebildet ist und daß zum Beheizen des Breitbandstrahlers eine pulsbare Energiequelle (6) mit geringer mittlerer Leistung vorgesehen ist, deren Ausgangspulse bezüglich ihrer Pulsenergie und ihres Puls-Pausen-Verhältnisses so auf die Wärmekapazität des Breitbandstrahlers abgestimmt ist, daß dieser in den Pulspausen weitgehend abkühlt.

2. Vorrichtung nach Anspruch 1, dadurch gekennzeichnet, daß als Energiequelle (6) zum Beheizen des Breitbandstrahlers eine optische Halbleiterstrahlungsquelle, insbesondere eine Laserdiode (3) vorgesehen ist und daß der Breitbandstrahler im wesentlichen aus einer Absorptionsschicht (4) besteht oder eine solche aufweist, die im Strahlengang der Halbleiterstrahlungsquelle angeordnet ist.

3. Vorrichtung nach Anspruch 1 oder 2, dadurch gekennzeichnet, daß zum Einstellen der Strahlungstemperatur der Absorptionsschicht (4) die Pulsdauer und/oder die Intensität der Halbleiterstrahlung veränderbar ist.

4. Vorrichtung nach einem der Ansprüche 1 bis 3, dadurch gekennzeichnet, daß das Material oder die Materialzusammensetzung der Absorptionsschicht (4) an ein für die Breitbandstrahlung vorgegebenes Abstrahl-Spektrum, insbesondere an ein von dem Spektrum eines schwarzen oder grauen Strahlers abweichendes Spektrum, angepaßt ist.

5. Vorrichtung nach einem der Ansprüche 1 bis 4, dadurch gekennzeichnet, daß wenigstens eine für das Spektrum der Breitbandstrahlung relevante Schichteigenschaft der Absorptionsschicht (4), insbesondere deren Emissionskoeffizient, durch elektrische, optische und/oder chemische Beeinflussung der Absorptionsschicht vorzugsweise während des Betriebs des Breitbandstrahlers veränderbar ist.

6. Vorrichtung nach einem der Ansprüche 1 bis 5, dadurch gekennzeichnet, daß die Absorptionsschicht (4) oder der Breitbandstrahler auf einem vorzugsweise für die Halbleiterstrahlung strahlungs-duchlässigen Träger, insbesondere einer Trägerplatte (5) mit hohem Wärmeleitungswiderstand angeordnet ist.

7. Vorrichtung nach einem der Ansprüche 1 bis 6, dadurch gekennzeichnet, daß der Halbleiterstrahler als optoelektronisches Bauelement in ein VorrichtungsGehäuse (2) integriert ist, daß die Absorptionsschicht integrales Bestandteil dieses Gehäuses (2) ist und vorzugsweise mikromechanisch an das Gehäuse (2) angebunden ist.

8. Vorrichtung nach einem der Ansprüche 1 bis 7, dadurch gekennzeichnet, daß die Halbleiterstrahlungsquelle, die Absorptionsschicht (4) und gegebenenfalls zumindest ein frequenzselektiver optischer Filter (9) für die Breitbandstrahlung eine kompakte Baueinheit bilden.

9. Vorrichtung nach einem der Ansprüche 1 bis 8, dadurch gekennzeichnet, daß der Halbleiterstrahler in ein Gehäuse integriert ist, das zumindest in einem Teilbereich für die Halbleiterstrahlung strahlungsdurchlässig ist und daß die Absorptionsschicht (4) in diesem Teilbereich des Gehäuses an der Gehäuse-Außenwandung vorgesehen ist.

10. Vorrichtung nach einem der Ansprüche 1 bis 9, dadurch gekennzeichnet, daß die Halbleiterstrahlungsquelle so in ein Gehäuse integriert ist, daß die Absorptionsschicht (4) in einem von der Halbleiterstrahlung beaufschlagten Bereich der Innenwandung dieses Gehäuses vorgesehen ist und daß wenigstens ein Teilbereich des Gehäuses zumindest in einem bestimmten Wellenlängenbereich der Breitbandstrahlung strahlungsdurchlässig ist.

11. Vorrichtung nach einem der Ansprüche 1 bis 10, dadurch gekennzeichnet, daß das Gehäuse zumindest in seinem strahlungsduchlässigen Teilbereich als frequenzselektiver optischer Filter, insbesondere als Interferenzfilter ausgebildet ist.

12. Vorrichtung nach einem der Ansprüche 1 bis 11, dadurch gekennzeichnet, daß der Breitbandstrahler im wesentlichen aus einer elektrisch leitfähigen Widerstandsschicht besteht und daß als Energiequelle (6) zum Beheizen des Strahlers eine Pulsstromquelle vorgesehen ist.

13. Vorrichtung nach einem der Ansprüche 1 bis 12, dadurch gekennzeichnet, daß der Breitbandstrahler zum Messen der Konzentration zumindest eines Gases mit wenigstens einem Empfänger (14) elektromagnetisch gekoppelt ist, daß in einem zwischen dem Breitbandstrahler und dem Empfänger (14) befindlichen Strahlengang sich das zu detektierende Gas befindet und daß in dem Strahlengang zumindest ein frequenzselektiver optischer Filter (9) angeordnet ist, dessen Durchlaßbreich auf wenigstens eine Absorptionswellenlänge des zu messenden Gases abgestimmt ist.
